# EUROPEAN PATENT APPLICATION

(11) **EP 4 567 189 A1**
(43) Date of publication of application: **11.06.2025**
(21) Application number: 23214655.5
(22) Date of filing: 06.12.2023
(51) Int. Cl.: D21H 27/38

(54) **A PROCESS FOR MANUFACTURING A PURIFIED FIBER MATERIAL FROM OLD CORRUGATED CONTAINERS (OCC)**

(71) Applicant: Billerud Aktiebolag (publ), 169 27 Solna (SE)
(72) Inventor: HÄGGQUIST, Mats, 802 69 Gävle (SE); NORDSTRÖM, Fredrik, 652 26 Karlstad (SE); WINESTRAND, Sandra, 702 11 Örebro (SE)
(74) Representative: Kransell & Wennborg KB

(57) **Abstract**

The present disclosure relates to a process for manufacturing a purified fiber material from Old Corrugated Containers (OCC) for use in preparing packaging board, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step;
- subjecting the washed fiber material to a steam heating step, wherein the heated steam having a temperature of 100°C or more, thereby providing a purified fiber material.

## Description

### TECHNICAL FIELD

The present disclosure relates to a process for manufacturing a purified fiber material from Old Corrugated Containers (OCC) for use in packaging board such as liquid or food packaging board, and a packaging board comprising the purified fiber material.

### BACKGROUND

Liquid packaging containers provides a significantly reduced environmental impact compared to PET bottles. However, with an increasing exchange from PET bottles to cellulose based beverage cartons, an increased liquid packaging board production follows. For environmental reasons and to anticipate possible stricter legislations, there is an increasing requirement and desire to include recycled fibers in such cellulose-based packaging products. The strict purity requirements for liquid and food packaging board as well as the need to maintain mechanical properties for the board produced from the recycled fibers have however been considered difficult to maintain when using recycled fibers such as OCC.

In view of the above there is a need to manufacture fiber material, with a reduced level of chemical and microbial contaminants, from recycled fiber material and wherein the fiber material is to be used in preparing packaging board, preferably liquid and food packaging board.

### SUMMARY

It is an object of the present disclosure to, at least partially, overcome the above-described deficiencies. This is achieved by a process for manufacturing a purified fiber material from OCC for use in preparing packaging board according to claim 1 and a packaging board according to claim 16.

According to a first aspect, the present disclosure relates to a process for manufacturing a purified fiber material from OCC for use in preparing packaging board, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step; and
- subjecting the washed fiber material to a steam heating step, wherein the heated steam has a temperature of 100°C or more, thereby providing a purified fiber material.

Corrugated boxes made from corrugated board are, due to the supportive structure combined with a low weight, a very common packaging solution for mainly secondary packaging's but to some extent also for primary packaging. The corrugated packaging market is growing with the help of the increasing interest for e-commerce and developments in digital printing technologies. Consequently, the availability of OCC is relatively high. It is therefore highly interesting from an environmental perspective, but also from a cost perspective, to recycle fibers from OCC. A further advantage with the use of OCC is that OCC usually is free from plastic, allowing the use of a simpler cleaning process.

In particular, liquid packaging, i.e. paperboard used in liquid packaging containers, and food packaging, i.e. paperboard used in food packaging containers, have strict requirements for chemical and microbial contaminants and paperboard produced from recycled fibers generally have too high levels of both. It was however found by the present inventors that with the process according to the present disclosure, the levels of chemical and microbial contaminants could be reduced to surprisingly low levels.

There is thus a great potential in using the present process for preparing purified fibers from OCC for use in liquid and food packaging.

During the production process of paper materials various chemicals, which are undesired in liquid packaging board and food packaging board, are incorporated into the paper products. For packaging board used in direct contact with food and liquids there are for example specific requirements with respect to the level of phthalates. One way which has been proposed to solve this problem is the use of specific migration barriers on the liquid and food paper board. However, with the present process, the level of phthalates, benzophenone and DIPN may be drastically reduced which reduces, or eliminates, the need to provide a specific migration barrier between the liquid and food paperboard and the liquid/food in the packaging.

The aerobic count may be 7×10³ CFU/g or lower, for vegetative cells and spores separately, after the steam heating step. It was found by the present inventors that the steam heating step as disclosed herein enabled a highly reduced aerobic count in the final fiber material.

The anaerobic count in the fiber material may be 1000 CFU/g or lower, for vegetative cells and spores separately, after the steam heating step. It was found by the present inventors that the steam heating step as disclosed herein enabled a highly reduced anaerobic count in the final fiber material.

The level of phthalates in the resulting fiber material may be 0.25 mg/l or lower, preferably 0.2 mg/l or lower. It was surprisingly found that the total level of phthalates in the fiber material could be reduced to 0.25 mg/ml or lower, or preferably 0.2 mg/ml or lower, by means of the process as disclosed herein, as measured either by extraction with isooctane or by extraction with ethanol and the levels being determined by Gas Chromatography Mass Spectrometry (GCMS).

The temperature of the steam in the steam heating step may be within the range of from 100 to 170°C, optionally within the range of from 102 to 150°C such as within the range of from 105 to 150°C. This, in combination with the first flotation step, was found to enable the provision of a purified fiber material with a surprisingly reduced level of chemical and microbial contaminants.

The temperature of the steam in the steam heating step may preferably be within the range of from 100 to 130°C, preferably from 102 to 130°C, this has been found to provide a purified fiber material with beneficial fiber properties, such as mechanical fiber properties, by means of a cost-efficient process.

In the steam heating step, the washed fiber material may be subjected to the heated steam for a period of time of 25 seconds or more, preferably for a period of time of 30 seconds or more, such as 1 minute or more, such as for a period of time of 2 minutes or more, or 3 minutes or more, or within the range of from 1 minute to 10 minutes. This was found by the present inventors to further reduce the level of microbial contaminants.

The steam heating step may for example be carried out in a heat disperser wherein the fibers are mixed while being subjected to the steam.

The Clostridia spore count in the fiber material may be below 100 CFU/g after the steam heating step, as determined by the microbiological analysis described herein.

The *Bacillus cereus* count in the fiber material may be below 10 CFU/g after the steam heating step, as determined by the microbiological analysis described herein.

The first flotation step may be carried out under an OCC stock consistency (pulp concentration) within the range of from 0.3 to 2.4%, preferably 0.7 to 1.5%, at a temperature within the range of from 38 to 72°C, optionally within the range of from 40 to 50°C, and a pH within the range of from 7 to 9. This has been found to provide a beneficial balance of process efficiency and reduced energy and water consumption.

The first screening step may include a cylindrical screen or a flat screen and wherein the cylindrical screen may comprise holes with a diameter within the range of from 0.8 to 2 mm, preferably from 1 to 1.8 mm, and the flat screen comprises holes with a diameter within the range of from 2 to 3 mm.

The process may comprise a second screening step, between the first screening step and the first flotation step.

The second screening step may include a screen with slits having a width within the range of from 0.1 mm to 0.3 mm.

The process may comprise a step of subjecting the fibers of a second flotation step.

The second flotation step may be carried out using an OCC stock consistency within the range of from 0.3 to 2.4%, preferably 0.7 to 1.5%, at a temperature within the range of from 38 to 72°C, preferably within the range of from 40 to 50°C, and a pH within the range of from 7 to 9. This was found to improve the efficiency of the process while keeping the energy and water consumption at low levels.

The second flotation step may be carried out after the washing step or after the steam heating step.

The second flotation step may be followed by a second washing step.

According to a second aspect, the present disclosure relates to a process for manufacturing a packaging board, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step;
- subjecting the washed fiber material to a steam heating step, wherein the heated steam having a temperature of 100°C or more, thereby providing a purified fiber material; and
- preparing a packaging board including the purified fiber material.

The process according to the second aspect wherein at least 5 wt.% or more, optionally 10% or more, of the total amount of fibers in the packaging board are the purified fiber material.

Preferably the packaging board is a liquid or food packaging board.

The aerobic count may be 7×10³ CFU/g or lower, for vegetative cells and spores separately, after the steam heating step. It was found by the present inventors that the steam heating step as disclosed herein enabled a highly reduced aerobic count in the final fiber material.

The anaerobic count in the fiber material may be 1000 CFU/g or lower, for vegetative cells and spores separately, after the steam heating step. It was found by the present inventors that the steam heating step as disclosed herein enabled a highly reduced anaerobic count in the final fiber material.

The level of phthalates in the resulting fiber material may be 0.25 mg/l or lower, preferably 0.2 mg/l or lower. It was surprisingly found that the total level of phthalates in the fiber material could be reduced to 0.25 mg/ml or lower or preferably 0.2 mg/ml or lower, by means of the process as disclosed herein, as measured either by extraction with isooctane or by extraction with ethanol and the levels being determined by Gas Chromatography Mass Spectrometry (GCMS).

The temperature of the steam in the steam heating step may be within the range of from 100 to 170°C, optionally within the range of from 100 to 150°C, such within the range of from 102 to 150°C. This, in combination with the first flotation step, was found to enable the provision of a purified fiber material with a surprisingly reduced level of chemical and microbial contaminants.

The temperature of the steam in the steam heating step may preferably be within the range of from 100 to 130°C, preferably from 102 to 130°C, this has been found to provide a purified fiber material with beneficial fiber properties, such as mechanical fiber properties, by means of a cost-efficient process.

In the steam heating step, the washed fiber material may be subjected to the heated steam for a period of time of 25 seconds or more, preferably for a period of time of 30 seconds or more, such as for a period of time of 1 minute or more, such as for a period of time of 2 minutes or more or 3 minutes or more, or within the range of from 1 minute to 10 minutes. This was found by the present inventors to further reduce the level of microbial contaminants.

The Clostridia spore count in the fiber material may be below 100 CFU/g after the steam heating step, as determined by the microbiological analysis described herein.

The *Bacillus cereus* count in the fiber material may be below 10 CFU/g after the steam heating step, as determined by the microbiological analysis described herein.

The first flotation step may be carried out under an OCC stock consistency (pulp concentration) within the range of from 0.3 to 2.4%, preferably 0.7 to 1.5%, at a temperature within the range of from 38 to 72°C, optionally within the range of from 40 to 50°C, and a pH within the range of from 7 to 9. This has been found to provide a beneficial balance of process efficiency and reduced energy and water consumption.

The first screening step may include a cylindrical screen or a flat screen and wherein the cylindrical screen may comprise holes with a diameter within the range of from 0.8 to 2 mm, preferably from 1 to 1.8 mm, and the flat screen comprises holes with a diameter within the range of from 2 to 3 mm.

The process may comprise a second screening step, between the first screening step and the first flotation step.

The second screening step may include a screen with slits having a width within the range of from 0.1 mm to 0.3 mm.

The process may comprise a step of subjecting the fibers of a second flotation step.

The second flotation step may be carried out using an OCC stock consistency within the range of from 0.3 to 2.4%, preferably 0.7 to 1.5%, at a temperature within the range of from 38 to 72°C, preferably within the range of from 40 to 50°C, and a pH within the range of from 7 to 9. This was found to improve the efficiency of the process while keeping the energy and water consumption at low levels.

The second flotation step may be carried out after the washing step or after the steam heating step.

The second flotation step may be followed by a second washing step.

Optionally, the packaging board, such as the liquid or food packaging board furthermore comprises fibers selected from the group of; bleached and unbleached sulphate kraft pulps from softwood and/or hardwood trees. Mechanical pulps from softwood or hardwood tress such as CTMP (chemithermomechanical pulp), SGW (stone groundwood pulp), PGW (pressurised groundwood pulp), RMP (refiner mechanical pulp) CMP (chemi-mechanical pulp) or TMP (thermomechanical pulp).

### BRIEF DESCRIPTION OF DRAWINGS

The various aspects of the present disclosure, including its particular features and advantages, will be readily understood from the following detailed description and the accompanying drawings, in which:
- Fig. 1: is a flowchart of the process according to the first aspect of the present disclosure;
- Fig. 2: is a flowchart of an alternative process according to the first aspect of the present disclosure; and
- Fig. 3: is a flowchart of the process according to the second aspect of the present disclosure.

### DETAILED DESCRIPTION

The present disclosure will now be described more fully hereinafter with reference to the accompanying drawings.

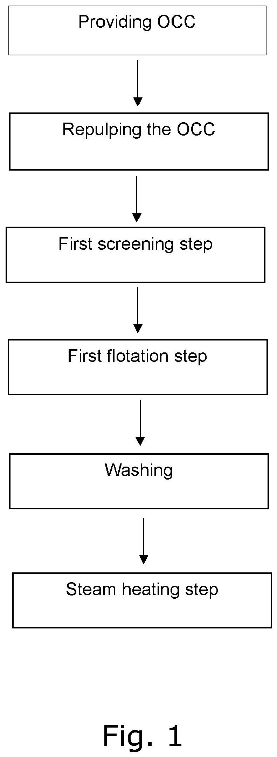

With reference to figure 1, which is a flowchart of the process for manufacturing a purified fiber material from OCC for use in preparing packaging board according to the first aspect of the present disclosure, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step; and
- subjecting the washed fiber material to a steam heating step, wherein the heated steam has a temperature of 100°C or more, thereby providing a purified fiber material.

By "OCC" herein is meant all corrugated board containers which refers to containers where the material is made from at least two separate layers of papers, including one or more liners and one or more corrugated, or wavy, layers, however, more typically from three separate layers, including two liners and the corrugated layer sandwiched between the two liners.

In the repulping step the pulping of the OCC may be carried out in a drum pulper, or in a conventional cylindrical type of pulper, to convert the recycled OCC into a fiber slurry. A preferred temperature may be within the range of from 45 to 55 °C, such as 50 to 55 °C. However, higher temperatures may be used which increases the efficiency of the pulping but which at the same time increases the energy cost. The cylindrical type of pulper can be operated at either low consistency (LC), medium consistency (MC) or high consistency (HC).

Subsequent to the repulping step, the resulting fiber slurry is subjected to a first screening step to remove trash and solid contaminants. The first screening step may be performed using a cylindrical screen or a flat screen, such cylindrical screen may comprise holes with a diameter within the range of from 0.8 to 2.0 mm and such flat screen may comprise holes with a diameter within the range of from 2 to 3 mm.

After screening the fiber slurry in the first screening step, the resulting fiber material may optionally be further cleaned. The cleaning step may be a centrifugal cleaning in hydrocyclones. In a hydrocyclone, a centrifugal field will force heavy particles or substances outward while light particles move to the centre. The different streams are then separated. Hydrocyclones may separate according to density, if particles are heavier than water, size and deformability, e.g. of stickies. The hydrocyclones may be Low-Consistency cleaners (LCcleaners), High-Consistency Cleaners (HC-cleaners) or Medium-Consistency Cleaners (MC-cleaners). The LC cleaners work in consistency ranges of 0.5 to 1.5%, the HC-cleaners operate at from 2 to 5 % consistencies and the MC cleaners operates at consistencies up to 2 %.

The process may optionally comprise a second screening step (not shown), between the first screening step and the first flotation step. The second screening step may optionally be between the washing step and the flotation step. The second screening step may include a screen with slits having a width within the range of from 0.1 mm and 0.3 mm, i.e. such that the first screening step is a coarse screening and the second screening step is a fine screening. The fact that the process comprises a first screening, being a coarse screening reducing the trash content, followed by a second fine screening step may reduce the fibre loss significantly and thus providing a higher fibre output.

The first flotation step may be carried out at a pulp concentration of about 0.8 to 1.5%, at temperatures within the range of from 40 to 70°C and at a pH of from 7 to 9, and by using flotation chemicals, such as Solenis Nopcoflot PF-NA. In flotation, air bubbles attach themselves to the particles in a suspension and transports these to the surface. Optionally, surfactants are added to the fiber materials in a separate washing step (not shown) prior to the flotation. After flotation the pulp material is washed, wherein the washing includes a filtration process for removing debris particles, such as debris particles smaller than 30µm from the fiber suspension. Such debris particles may for example be fillers, coating particles, fines, micro stickies and ink particles. In the washing process belt filters, belt pressure filters or disk filter may for example be used.

In an optional step (not shown), the pulp material is subjected to a refining step, which may enhance the strength of the fiber material.

The washed fibers are subsequently subjected to a steam heating step. In the steam heating step, high temperature steam is used to eliminate or reduce microbial growth. The heated steam should have a temperature of 100°C or more. Preferably, the temperature of the steam in the steam heating step is within the range of from 100 to 170 °C, more preferably within the range of from 100 to 150 °C. The temperature of the steam in the steam heating step may alternatively be within the range of from 100 to 130°C, preferably from 102 to 130°C.

To further reduce or eliminate microbial growth, the washed fibers may be subjected to the heated steam, having a temperature of 100°C or more, for 25 seconds or more, or 30 seconds or more, optionally for 1 minute or more, such as 2 minutes or more, preferably 3 minutes or more, such as for 1 to 10 minutes.

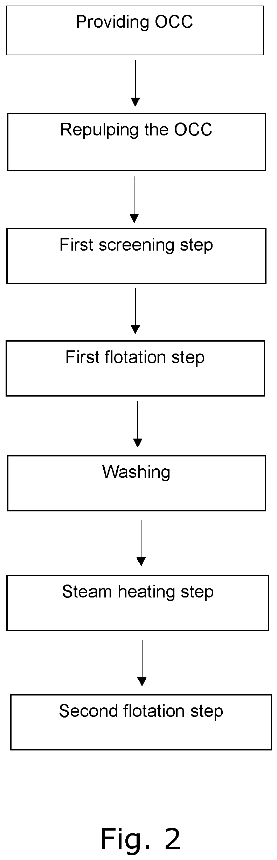

Figure 2 is a flowchart of the process for manufacturing a purified fiber material from OCC for use in preparing packaging board according to an alternative embodiment, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step;
- subjecting the washed fiber material to a steam heating step, wherein the heated steam has a temperature of 100°C or more, thereby providing a purified fiber material; and
- subjecting the steam heated fiber material to a second flotation step.

The process thus comprises all of the steps as the method according to the first aspect with an additional step of a second flotation step.

The second flotation step may be carried out under an OCC stock consistency within the range of from 0.3 to 2%, at a temperature within the range of from 38 to 72°C and a pH within the range of from 7 to 9.

The second flotation step may be followed by a second washing step (not shown).

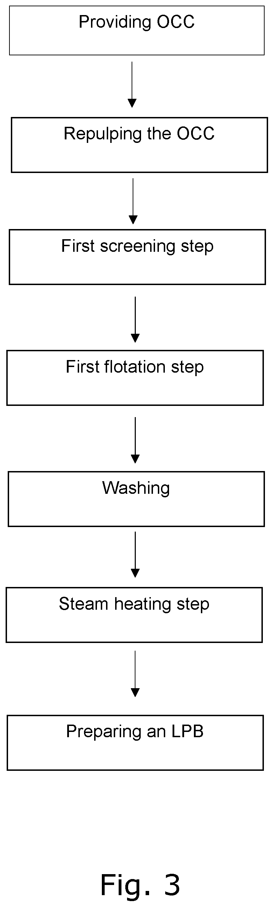

With reference to figure 3, which is a flowchart of the process for preparing liquid packaging board comprising purified fiber material from OCC according to a second aspect of the present disclosure, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step;
- subjecting the washed fiber material to a steam heating step, wherein the heated steam has a temperature of 100°C or more, thereby providing a purified fiber material; and
- preparing a liquid packaging board (LPB) comprising the purified fiber material.

The final step of preparing a liquid packaging board comprising the purified fiber material may for example include preparing a base board having at least two outer plies with an outer ply material composition and an optional mid-ply with a mid-ply material composition. The liquid packaging board may optionally be coated with one or more coating layers such as a dispersion coating layer and/or clay coating.

In the method disclosed in figure 3, a liquid packaging board is prepared, however the disclosed herein is not limited to liquid packaging board but relates to any packaging board.

The method disclosed in figure 3, may additionally include a second flotation step, optionally subsequent to the steam heating step.

The second flotation step may be carried out under an OCC stock consistency within the range of from 0.3 to 2.4%, at a temperature within the range of from 38 to 72°C and a pH within the range of from 7 to 9.

The second flotation step may be followed by a second washing step.

According to a third aspect, the present disclosure relates to a packaging board, preferably a liquid or food packaging board, comprising purified fiber material obtained by the method according to the second aspect as disclosed herein.

Optionally, 5 wt.% or more, optionally 10% or more, of the fibers in the packaging board prepared, preferably a liquid or food packaging board, are the purified fiber material obtained according to the process according to the first aspect.

### Experimental section

Fiber material obtained from a process according to the present disclosure was analysed both with a microbiological analysis and a chemical contaminants analysis to evaluate the suitability of the fiber material to be used for preparing liquid or food packaging board. The raw material used was OCC 1.05 (SS-EN643) from Germany.

The pulping was done in batches in a screening drum and at a temperature of 50°C. The reject from the screening drum was mainly plastics. The pulp consistency after pulping was 16 to 18% and was then diluted down to 4% before the HD (high density) cleaning. The HD cleaning was a hydrocyclone cleaning and was performed at 4% consistency and removed high density contaminants.

After the pulper and HD cleaning a coarse cleaning step was carried out with a 1.6 mm hole screen, followed by a LC cleaning step with a pulp consistency of around 1.5% and a finer screening step with openings of about 0.15 mm and a pulp consistency of 0.9 - 1.4%.

The first flotation was performed at about 1% pulp consistency and flotation chemicals (Solenis Nopcoflot PF - NA) to a concentration of 0.7% was added to the pulp. The temperature during the first flotation was about 45°C.

After the first flotation step, the pulp was washed in a Vario split washer, and the consistency was increased to approximately 11-12%.

A screw press increased the pulp concentration further to about 30% and the pulp was then fed into the disperser for the steam heating step. The retention time in the steam heating step was 3 minutes and it was pressurized with 1 bar steam. The temperature of the steam was measured to 103°C. The pulp concentration was subsequently diluted to about 1%.

Before the second flotation, flotation chemicals (Solenis Nopcoflot PF - NA) to a concentration of 0.7% was added to the pulp. The temperature during the second flotation was about 45°C.

Samples for analysis of chemical contaminants were taken before and after the flotation steps.

After the second flotation the pulp was dewatered in a thickener and a screw press. The consistency after the screw press was around 30%.

### Chemical contaminants analysis

### Sampling

Samples were taken at different positions;
1) In the drum pulper (batch 1 and 2, i.e. first sample)
2) In the drum pulper (batch 3 and 4, i.e. second sample)
3) At the inlet of flotation 1
4) At the inlet of flotation 2
5) At the outlet of flotation 2
6) End product (first sample)
7) End product (second sample)

### Method

The analyses to determine the levels of chemical contaminants were performed at the test laboratory ISEGA. The samples were extracted with isooctane, the results being shown in table 1 and 95% ethanol, the results being shown in table 2. A Gas Chromatography Mass Spectrometry (GCMS) screening of the solvent extract was performed. The chromatogram was analyzed semi-quantitatively against ISEGAs internal standard. The samples after the first flotation step, i.e. samples 4, had a pulp concentration of 1.10%.

### Results

Table 1 below illustrates the amount of benzophenone, DIPN, DEHP, DEHT, DiBP and DBP being extracted with isooctance in each of the sample and Table 2 below shows the amount of DIPN, DEHP, DEHT, DiBP and DBP being extracted with 95% ethanol in each of the sample. As shown in the samples, the most significant reduction of the unwanted substances occurred between samples 3 and 4, i.e. after the first flotation step, thus illustrating that this first step was the most important step for reducing the unwanted phthalates.

**Table 1**

| Isooctane [mg/L extract] | | | | | | | |
|---|---|---|---|---|---|---|---|
| Substance | Content detected | | | | | | |
| | Sample 1 | Sample 2 | Sample 3 | Sample 4 | Sample 5 | Sample 6 | Sample 7 |
| DEHP (diethylhexyl phthalate) | 0.4 | 0.4 | 0.4 | 0.1 | 0.07 | 0.08 | 0.07 |
| DEHT (diethylhexyltere phthalat) | 0.2 | 0.2 | 0.2 | 0.06 | 0.05 | 0.05 | 0.05 |
| DiBP (diisobutyl phthalate) | 0.03 | 0.03 | 0.02 | * | * | 0.01 | * |
| DBP (dibutylphthalate) | 0.06 | 0.05 | 0.04 | * | * | * | * |
| Benzophenone | 0.01 | * | * | * | * | * | * |
| DIPN (diisopropyl naphthalene) | 0.1 | 0.09 | 0.1 | 0.5 | 0.06 | * | * |

| | | | | | | | |
|---|---|---|---|---|---|---|---|
| *Below detection limit | | | | | | | |

**Table 2**

| Ethanol [mg/L extract] | | | | | | | |
|---|---|---|---|---|---|---|---|
| Substance | Content detected | | | | | | |
| | Sample 1 | Sample 2 | Sample 3 | Sample 4 | Sample 5 | Sample 6 | Sample 7 |
| DEHP (diethylhexyl phthalate) | 0.5 | 0.5 | 0.5 | 0.2 | 0.1 | 0.1 | 0.1 |
| DEHT (diethylhexyltere phthalat) | 0.3 | 0.3 | 0.3 | 0.1 | 0.09 | 0.08 | * |
| DiBP (diisobutyl phthalate) | 0.06 | 0.07 | 0.05 | * | * | * | * |
| DBP (dibutylphthalate) | 0.1 | 0.1 | 0.2 | * | * | * | * |
| DIPN (diisopropyl naphthalene) | 0.5 | 0.2 | 0.2 | * | * | * | * |

| | | | | | | | |
|---|---|---|---|---|---|---|---|
| *Below detection limit | | | | | | | |

In table 3 below, analysis made on the concentrations were translated to maximum migration levels into foodstuff.

The following assumptions were used for the scenario: assume the extraction with ethanol and isooctane to near the total possible extraction, assume a food density 1kg/L, assume total migration from the board to the foodstuff, assume no migration barrier and no contribution to the contaminants from other parts of the package, assume a material made of 100% recycled fiber, a package containing 200mL with an area of 2,4 dm² made of a carton of grammage 200 g/m² (density 740 kg/m³, thickness 270µm). These assumptions lead to a calculated 0,024 kg recycled fibre for 1 kg food [(0,0024 × 200)/0,2 × 1000) = 0,024. The extraction was performed at 0,04 kg fibre per liter solvent.

**Table 3**

| | Bfr (migration to foodstuff in [mg component /kg foodstuff]) | start material SUM [mg/kg fibre] | end material SUM [mg/kg fibre] | total migration start material [mg component/kg foodstuff] | total migration end material [mg component/kg foodstuff] |
|---|---|---|---|---|---|
| DEHP | max 1.5 | 22.5 | 4.5 | 0.54 | 0.108 |
| DBP | max 0.3 | 4 | * | 0.10 | * |
| DiBP | max 0.3 | 2.5 | 0.25 | 0.06 | 0.006 |
| Sum dibutylphthalate and diisobutyl phthalate | max 0.3 | 6.5 | 0.25 | 0.16 | 0.006 |
| Benzophenone | max 0.6 | 0.25 | * | 0.01 | * |
| DIPN | As low as technically feasible | 15 | * | 0.36 | * |

| | | | | | |
|---|---|---|---|---|---|
| *Below detection limit | | | | | |

Table 3 illustrates that the process according to the present disclosure provides a fiber material which is suitable for use in preparing packaging board, such as liquid or food packaging board, with a surprisingly high reduction of undesired phthalates, such as DEHP, DPB, DiBP and DEHT, and also of benzophenone and DIPN.

### Microbial analysis

### Sampling

Samples were performed in sterile tubes at three different positions;
1) Slushing
2) Before entering the heated disperser
3) After the heated disperser

### Determination of bacteria and spores

The samples were analyzed at the test laboratory ISEGA according to ISO 8784-1 and was performed in two replicates. Aerobic count was determined on PC-agar and anaerobic count on Schaedler-agar. The incubation was performed at 30°C during 72 h.

### Determination of specified microorganisms

Determination of Clostridia was performed according to DIN 54383:2015-11. Presumptive *Bacillus cereus* according to official collection of analytical methods according to 964 LFGB, April 2022, on BACARA agar.

### Results

The results from the microbial analyses are presented in tables 4 and 5 below.

The process according to the present disclosure decreased the total aerobic and anaerobic count, presumptive B cereus and Clostridia.

**Table 4**

| **Sample** | **Aerobic count (CFU/g)** | | **Anerobic count (CFU/g)** | |
|---|---|---|---|---|
| | *Vegetative* | *Spores* | *Vegetative* | *spores* |
| **1** | >1.5×10⁸ | 7.1×10⁶ | 1.2×10⁷ | 1.5×10⁴ |
| **2** | 1.2×10⁸ | 1.3×10⁸ | 1.0×10⁸ | 2.2×10⁵ |
| **3** | 5.5×10³ | 6.1×10³ | 140 | 370 |

**Table 5**

| **Sample** | **Clostridia spores** | **Presumptive *Bacillus cereus*** |
|---|---|---|
| **1** | Positive for 0.01 g sample (10² - 10³ CFU/g) | 8.5×10³ |
| **2** | Positive for 0.01 g sample (10² - 10³ CFU/g) | 220 |
| **3** | Negative for 0.01 g sample (<100 CFU/g*) | <10* |

| | | |
|---|---|---|
| *Measured value below detection limit | | |

As illustrated in the above tables, the chemical and the microbial analyses show that the fibres provided by the process according to the present disclosure have a low level of chemical contaminants after the first flotation step and a low level of microbial contaminants after the steam heating step. It was thus concluded that the present process provides a surprisingly high reduction in the levels of chemical contaminants, such as phthalates, benzophenone and DIPN, and in the levels of microbial contaminants and thus enables the use of OCC as the source for recycled fibres for preparing packaging board, such as liquid or food packaging board, with a high purity level.

## Claims

1. A process for manufacturing a purified fiber material from Old Corrugated Containers (OCC) for use in preparing packaging board, the process comprising the steps of;
- providing OCC;
- repulping the OCC into a fiber slurry;
- subjecting the fiber slurry to a first screening step;
- subjecting the screened fiber material to a first flotation step;
- washing the fiber material subjected to the first flotation step; and
- subjecting the washed fiber material to a steam heating step, wherein the heated steam having a temperature of 100°C or more, thereby providing a purified fiber material.

2. The process according to claim 1, wherein the aerobic count is below 7×10³ CFU/g, for vegetative cells and spores separately, after the steam heating step.

3. The process according to claim 1 or 2, wherein the anaerobic count in the fiber material is below 1000 CFU/g, for vegetative cells and spores separately, after the steam heating step.

4. The process according to any one of the preceding claims, wherein the temperature of the steam in the steam heating step is within the range of from 100 to 170 °C, optionally within the range of from 100 to 150 °C.

5. The process according to any one of the preceding claims, wherein the steam heating step, the washed fiber material is subjected to the heated steam for a period of time of 25 seconds or more, preferably 30 seconds or more, such as within the range of from 25 seconds to 10 minutes.

6. The process according to any one of the preceding claims, wherein the Clostridia spore count in the fiber material is below 100 CFU/g after the steam heating step.

7. The process according to any one of the preceding claims, wherein the *Bacillus cereus* count in the fiber material is below 10 CFU/g after the steam heating step.

8. The process according to any one of the preceding claims, wherein the first flotation step is carried out under an OCC stock consistency within the range of from 0.3 to 2.4%, at a temperature within the range of from 38 to 72°C and a pH within the range of from 7 to 9.

9. The process according to any one of the preceding claims, wherein the first screening step includes a cylindrical screen or a flat screen and wherein the cylindrical screen comprises holes with a diameter within the range of from 0.8 to 2.0 mm and the flat screen comprises holes with a diameter within the range of from 2 to 3 mm.

10. The process according to any one of the preceding claims, wherein the process comprises a second screening step, between the first screening step and the first flotation step.

11. The process according to claim 10, wherein the second screening step includes a screen with slits having a width within the range of from 0.1 mm and 0.3 mm.

12. The process according to any one of the preceding claims, wherein the process comprises a step of subjecting the fibers of a second flotation step.

13. The process according to claim 12, wherein the second flotation step is carried out under an OCC stock consistency within the range of from 0.3 to 2.4%, at a temperature within the range of from 38 to 72°C and a pH within the range of from 7 to 9.

14. A process for manufacturing a packaging board, preferably a liquid or food packaging board, comprising providing a purified fiber material according to any one of the preceding claims and wherein a packaging board, preferably a liquid or food packaging board, is prepared from the purified fiber material.

15. A packaging board comprising purified fiber material obtained according to any one of the preceding claims, preferably the packaging board is a liquid or food packaging board.

16. A packaging board according to claim 15, wherein 5 wt.% or more, optionally 10% or more, of the fibers are the purified fiber material obtained according to any one of the preceding claims.
